# EUROPÄISCHE PATENTSCHRIFT

(11) **EP 1 321 264 B1**
(45) Veröffentlichungstag und Bekanntmachung des Hinweises auf die Patenterteilung: **19.07.2006**
(21) Anmeldenummer: 01129977.3
(22) Anmeldetag: 17.12.2001
(51) Int. Cl.: B29B 9/06, B29C 47/10, B29C 47/76

(54) **Verfahren zur Herstellung von Granulat**
Method for manufacturing granules
Procédé de production de granulés

(43) Veröffentlichungstag der Anmeldung: 25.06.2003
(73) Patentinhaber: HB-Feinmechanik GmbH & Co.KG, 94526 Metten (DE)
(72) Erfinder: Lihotzky-Vaupel, Wolfram, 94557 Niederalteich (DE)
(74) Vertreter: Wunderlich, Rainer

(56) Entgegenhaltungen:
- EP-A- 0 304 401
- EP-A- 0 725 110
- WO-A-93/20140
- WO-A-94/14886
- WO-A-99/02596
- DE-A- 4 331 747
- US-A- 5 378 418
- US-A- 5 417 992
- US-A- 5 939 192
- DATABASE WPI Section Ch, Week 199526 Derwent Publications Ltd., London, GB; Class A31, AN 1995-196537 XP002199110 & JP 07 112433 A (FRIENDS OF FREESIA KK), 2. Mai 1995 (1995-05-02)

## Beschreibung

Die Erfindung betrifft ein Verfahren zur Herstellung von Granulat aus einer thermoplastischen Materialmischung, welche aus einem natürlichen Polymer und mindestens einer weiteren Naturstoffkomponente besteht.

In den letzten Jahren hat sich ein immer stärker steigender Bedarf ergeben, Kunststoffe auf Mineralölbasis durch natürliche, nachwachsende Rohstoffe zu ersetzen. Hierzu ist es bekannt, thermoplastische Materialmischungen zu verwenden, welche im Wesentlichen aus einem natürlichen, thermoplastischen Polymer bestehen. Derartige natürliche Polymere können heutzutage ohne größeren Aufwand aus pflanzlichen oder tierischen Rohstoffen gewonnen werden. Teilweise stellen die Ausgangsprodukte sogar Abfallstoffe, beispielsweise der holz- oder fleischverarbeitenden Industrie dar, so dass die Gewinnung des natürlichen Polymers bereits an sich eine umweltschonende Abfallverwertung darstellt. Darüber hinaus kann durch natürliche Polymere der in mehrfacher Hinsicht nachteilige Verbrauch von Mineralöl vermindert werden.

Anders als thermoplastische Polymere auf Mineralölbasis sind natürliche Polymere jedoch empfindlicher und hinsichtlich Fließ- und Vernetzungseigenschaften problematischer. Zur Herstellung von Formkörpern, welche im Wesentlichen aus einem natürlichen Polymer bestehen, ist es üblich, die Ausgangskomponenten der thermoplastischen Materialmischung in möglichst pulverförmiger oder kleinteiliger Form miteinander zu vermischen, zu erwärmen und dabei das natürliche Polymer aufzuschmelzen und unmittelbar den gewünschten Formkörper unter Druck zu formen.

Bei diesem bekannten Verfahren der Herstellung der Materialmischung aus den einzelnen Komponenten und dem unmittelbar darauf folgenden Verpressen zum Formkörper besteht jedoch ein Nachteil darin, dass ein für die Materialmischung benötigter Faserstoff, beispielsweise Holzspäne, die Neigung hat, während der Lagerung Feuchtigkeit aus der Luft aufzunehmen. Ein hoher Feuchtegehalt ist jedoch aufgrund des Entstehens von Wasserdampf beim Erwärmen der Materialmischung nachteilig. Zudem kann die Qualität des faserigen Naturstoffes durch Schimmeln oder dem Einsetzen eines Verrottungsprozesses beeinträchtigt werden oder den Naturstoff sogar unbrauchbar für eine Weiterverarbeitung machen.

Es wurden Versuche unternommen, thermoplastische Materialmischungen aus einem natürlichen Polymer sowie mindestens einem weiteren Naturstoff zu einem weiterverarbeitbaren Granulat vorzuformen. Hierzu wurde eine sogenannte Pressagglomeration vorgesehen, bei welcher das natürliche Polymer sowie die weiteren Naturstoffkomponenten jedoch relativ hohen Belastungen ausgesetzt sind. Diese Belastungen können die Eigenschaften des natürlichen Polymers zusätzlich beeinträchtigen, so dass die Eignung des natürlichen Polymers als ein möglicher Ersatzstoff für thermoplastische Polymere weiter herabgesetzt wird.

JP-A-07 11 2433 offenbart eine Formeinrichtung zur Bildung von Strängen aus einem synthetischen Harz, die mit einem Extrusionszylinder einer Knetextrusionsvorrichtung verbunden ist. An einem Austritt der Formeinrichtung sind Führungsrollen vorgesehen. Das aus dem Extrusionszylinder extrudierte Harz wird durch eine in der Formeinrichtung vorhandene Öffnung zu einem Strang geformt und ausgeworfen. Der austretende Strang wird durch die Führungsrollen geführt und mittels einer rotierenden Klinge in zylindrische Pellets geschnitten, wobei die Temperatur im Bereich der Formeinrichtung geregelt wird.

DE-A-4331747 offenbart ein Verfahren gemäß dem Oberbegriff des Anspruchs 1 und beschreibt ein in einem Extrudierverfahren hergestelltes faserverstärktes Naturstoff-Granulat aus überwiegend nachwachsenden Rohstoffen, das bei Temperaturen von ca. 110° C zu Formteilen verarbeitbar ist. Die Herstellung von Formteilen geringer Dichte wird durch die Einbindung von inaktiven Porenbildnern im Naturstoff-Granulat und einer bei der thermoplastischen Verarbeitung initiierten Poren bildenden Reaktion ermöglicht.

US-A-4939192 offenbart eine thermoplastische Pressform auf Grundlage einer Pressmasse, das Teilchen aus zumindest einem Pflanzenfasermaterial und weiteren Additiven, insbesondere Harzsäuren, aufweist und die Teilchen in einer Matrix aus einem zu einem Gel geschmolzenen Biopolymer im Wesentlichen statistisch gleichmäßig verteilt sind, wobei die Matrix in den Zustand geschmolzenen Gels bei einer Temperatur oberhalb Raumtemperatur und einem Druck oberhalb Atmosphärendruck umgewandelt wurde.

Der Erfindung liegt die **Aufgabe** zugrunde, ein Verfahren anzugeben, mit welchem Granulat mit einem thermoplastischen Polymer schonend und zugleich besonders wirtschaftlich hergestellt werden kann.

Die Aufgabe wird nach der Erfindung durch ein Verfahren mit den Merkmalen des Anspruchs 1 gelöst. Bevorzugte Ausführungsformen sind in den abhängigen Ansprüchen angegeben.

Gemäß der Erfindung wird die Materialmischung aus den Ausgangskomponenten in dem Extruder hergestellt und aufgeschmolzen, wobei am Austritt des Extruders Druck und Temperatur derart eingestellt werden, dass die Materialmischung wieder verfestigt ist und unmittelbar bei Austritt aus dem Extruder durch eine Schneideinrichtung auf eine gewünschte Granulatgröße abgelängt wird. Anders als bei einer Pressagglomeration ist bei dem erfindungsgemäßen Verfahren die Materialmischung in dem aufgeschmolzenen Zustand innerhalb des Extruders und damit von der Umgebungsatmosphäre abgeschlossen und geschützt. Bei Austritt aus dem Extruder in die Umgebung ist die Materialmischung abgekühlt und auf einen schnittfesten Zustand verfestigt. Hierdurch kann das natürliche Polymer in dem derart hergestellten Granulat seine Vernetzungs- und damit Bindungseigenschaften weitgehend behalten. Die Vorverarbeitung zu Granulat beeinträchtigt daher in keinem nennenswerten Umfang die Weiterverarbeitungseigenschaften des Granulates in einem späteren thermischen Formgebungsprozess zu den eigentlichen Formkörpern.

Gleichzeitig ist ein derart hergestelltes Granulat aufgrund der möglichen Einbindung von Naturfasern in das erstarrte Polymer weniger anfällig für die Aufnahme von Luftfeuchtigkeit oder den Befall von Schimmelpilzen. Das Granulat kann so für längere Zeit offen oder verpackt gelagert werden, ohne dass wesentliche Qualitätseinbußen entstehen. Zudem ergibt sich eine erhebliche Verbesserung der Handhabbarkeit und somit der Herstellung von Formkörpern aus natürlichen, insbesondere nachwachsenden Rohstoffen.

Als thermoplastische natürliche Polymere können alle geeigneten und bekannten Polymere pflanzlicher oder tierischer Herkunft verwendet werden, welche gute Bindungseigenschaften aufweisen. Insbesondere sind Stärke, Getreidemehle, Gelatine, Lignine, Naturwachse etc. sowie deren Kombinationen geeignet. Je nach gewünschter Eigenschaft des Granulates kann der Anteil der natürlichen Polymere an der Materialmischung zwischen 10 bis 80 % liegen. Als weitere Komponenten für die Materialmischung können Füllmaterialien, Gleitmittel, Plastifizierungsmittel, Farbpigmente sowie weitere Additive zur Herstellung gewünschter Materialeigenschaften vorgesehen werden.

Grundsätzlich kann ein Ein-, Doppel- oder Mehrwellenextruder eingesetzt werden. Der Doppelwellenextruder kann ein Gleichläufer sein.

Zur Durchführung des Verfahrens ist es jedoch bevorzugt, dass als Extruder ein Doppelwellenextruder mit gegenläufig angetriebenen Extruderwellen verwendet wird. Ein derartiger Extruder sorgt nicht nur für eine besonders gute Durchmischung der einzelnen Komponenten, sondern insbesondere auch für einen gleichmäßigen Materialfluss am Ausgang des Extruders. Dies ist für eine besonders gute Verdichtung der Extrusionsstränge und damit auch für ein gleichmäßiges Ablängen zu Granulatkörnern möglichst homogener Größe wesentlich. Als Formwerkzeug wird eine Lochplatte und ein daran anliegendes rotierendes Messer als Schneideinrichtung vorgesehen.

Eine weitere bevorzugte Ausführungsform der Erfindung liegt darin, dass in den Extruder ein überkritisches Fluid in einem flüssigen Zustand eingeleitet und in die Materialmischung eingearbeitet wird. Ein solches überkritisches Fluid im flüssigen Zustand dient zur Befeuchtung der Materialmischung, so dass sehr schnell in dem Extruder ein pastöser Zustand der Materialmischung erreicht wird.

Dies ist insbesondere bei Verwendung faseriger, empfindlicher Füllstoffe während der Aufheizphase vorteilhaft. Denn bei direktem Kontakt der Faserstoffe mit der Extruderwandung besteht durch die Gehäuseheizung die Gefahr von Verkokungen der empfindlichen Faserstoffe, vor allem dann, wenn die Mischung sich zu Anfang des Extruders noch in einem zu trockenen Zustand befindet. Das überkritische Fluid in dem flüssigen Zustand dient auch zur besseren Wärmeverteilung der Heizenergie in der Materialmischung.

Das überkritische Fluid kann grundsätzlich zur Herstellung einer Porenstruktur innerhalb des Granulates verwendet werden. Bei Austritt der Materialmischung aus dem Extruder kann das überkritische Fluid unter Umgebungsbedingungen schlagartig in einen gasförmigen Zustand verpuffen. Zur Herstellung eines kompakten Granulates ist es jedoch bevorzugt, dass in einem Bereich vor dem Formwerkzeug der Druck vermindert und das überkritische Fluid als Gas abgeführt wird. Dies kann durch eine geeignete Entgasungseinrichtung erfolgen. Diese ist derart vor dem Ende der Extruderwellen angeordnet, dass die Endbereiche der Extruderwellen den gewünschten Druck zum Extrudieren der Materialmischung erzeugen können.

Bei dieser Vorgehensweise hat sich als zusätzlicher überraschender Vorteil gezeigt, dass beim Umsetzen des flüssigen überkritischen Fluides in den gasförmigen Zustand der Materialmischung zusätzlich Feuchtigkeit entzogen wird, wobei die Feuchtigkeit durch die Entgasungseinrichtung zusammen mit dem vergasten Fluid abgezogen wird. Gleichzeitig wird durch die Expansion die Materialmischung stark abgekühlt, so dass sich in vorteilhafter Weise hierdurch auch eine schnelle, sich gleichmäßig innerhalb der Masse einstellende Verfestigung erreichen lässt. Eine eventuell für das Schneiden der Extrusionstränge erforderliche Endabkühlung kann dann in einfacher Weise durch eine Kühleinrichtung an dem Formwerkzeug bzw. in dem Austrittskanal vor dem Formwerkzeug eingestellt werden.

Eine weitere bevorzugte Ausführungsform der Erfindung besteht darin, dass ein Schutzgas in den Extruder eingeleitet wird. Der Extruder stellt einen weitgehend abgeschlossenen Verfahrensraum dar, in welchem eine spezielle Schutzgasatmosphäre eingestellt werden kann. Durch ein inertes Schutzgas, beispielsweise CO₂, N₂, N₂O, Helium, Argon etc., können unerwünschte Reaktionen der erhitzten Materialmischung mit Sauerstoff weitgehend unterbunden werden. Derartige Oxidationen des natürlichen Polymers können deren Vernetzungs- und Bindungseigenschaften beeinträchtigen.

Gemäß der Erfindung kann das inerte Schutzgas auch als das zuvor beschriebene überkritische Fluid eingeleitet werden, was insbesondere bei der Verwendung von CO₂ sinnvoll ist.

Zur Herstellung besonders robuster und zugleich wirtschaftlicher Formkörper ist es erfindungsgemäß, dass als weitere Naturstoffkomponente ein Faserstoff verwendet wird. Der Naturstoff kann sowohl pflanzlicher und/oder tierischer Herkunft sein. Besonders bevorzugt sind Holz in Form von Sägemehl und/oder Holzspänen, Faserholz wie Palmenstämme geschreddert und getrocknet, Spanplatten geschreddert bzw. recycelt, Stroh von diversen Getreidearten, Schilf, Bagasse aus der Zuckerrohrgewinnung, Körnerspelze wie Reisspelze, Dinkelspelze bzw. Schalen, Naturfasern aller Art wie Kokos, Hanf, Flachs usw., Ölsaattrester, Olivenöltrester sowie Fruchttrester in getrocknetem oder ungetrockneten Zustand. Als Naturstoffe tierischer Herkunft können Haare oder Hornspäne verwendet werden. Die Rohstoffe sind vorzugsweise in getrockneter Form zu verarbeiten, können aber auch durch besondere Maßnahmen, beispielsweise durch mehrmalige Entgasungen, bis ca. 25 % Restfeuchte verarbeitet werden. Die Naturfasern können in verschiedenen und/oder definierten Längen als zusätzliche Armierung bzw. zur Erhöhung der Biege- und Zugfestigkeit zugesetzt werden.

Weiter ist es erfindungsgemäß, dass der Faserstoff mit einem flüssigen Additiv getränkt und/oder benetzt wird. Hierdurch wird die einzelne Faser der Naturstoffkomponente sozusagen versiegelt oder imprägniert. Als Additiv können beispielsweise Naturwachse oder Öle dienen, welche eine Faser umhüllen und/oder in diese aufgesaugt werden. Hierdurch wird die Faser in besonderer Weise geschützt. Beim Ablängen der Extrusionsstränge zu Granulat kann auf diese Weise verhindert werden, dass an den Schnittbereichen größere Flächen der Faser frei liegen, durch welche unerwünschte Luftfeuchtigkeit in das Granulat aufgenommen werden würde. Durch die spezielle Imprägnierung durch Wachse oder Öle wird einer Feuchtigkeitsaufnahme durch die Fasern an den Schnittkanten entgegengewirkt, so dass eine für die Weiterverarbeitung nachteilige Feuchte oder ein vorzeitig einsetzender Schimmel- oder Verrottungsprozess verhindert wird.

Alternativ oder ergänzend kann das Additiv ein Mittel mit einer pilz-, bakterien- oder schädlingsabweisenden Wirkung sein. Hierfür eignen sich insbesondere natürliche ätherische Öle mit einer gewünschten resistenten oder schädlingsabweisenden Wirkung. Dies schützt sowohl das Granulat, was für eine lange Lagerung vorteilhaft ist, sowie den aus dem Granulat hergestellten Formkörper.

Das Additiv kann der Naturstoffkomponente grundsätzlich vor der Einleitung in den Extruder zugeführt werden, beispielsweise können die Faserstoffe mit dem Additiv besprüht oder in einem Behälter mit dem Additiv getränkt werden. Erfindungsgemäß kann das Additiv in einem flüssigen Zustand in den Extruder eingedüst werden.

Besonders bevorzugt ist es nach der Erfindung, dass das Additiv in einem pulverförmigen Zustand in den Extruder eingeleitet wird, wobei das Additiv eine Schmelztemperatur aufweist, welche geringer als die Schmelztemperatur des natürlichen Polymers ist. Das Additiv schmilzt somit vor dem Aufschmelzen des thermoplastischen natürlichen Polymers, so dass das aufgeschmolzene Additiv die Faserstoffe besonders gut benetzen oder in diese aufgenommen werden kann. Mit der Einführung des Additivs in den Extruder kann der gesamte Herstellungsprozess für das Granulat weiter mit einem einzigen Extruder durchgeführt werden.

In einer weiteren Ausführungsform der Erfindung ist es vorgesehen, dass als eine weitere Komponente ein mineralisches Material eingeleitet wird, welches schwer entflammbar ist. Das mineralische Material kann in pulvriger Form oder auch als Flüssigkeit in den Extruder eingeführt werden. In flüssiger Form kann das mineralische Material, welches beispielsweise eine Kieselsäure oder ein Kieselsol ist, als Additiv zur Benetzung oder Imprägnierung der Faser der Naturstoffkomponente dienen. Auf diese Weise werden die relativ leicht entflammbaren Fasern brandgeschützt. Ergänzend oder alternativ kann ein mineralisches Pulver in die Materialmischung eingearbeitet werden, welches ebenfalls den Flammpunkt des Granulates bzw. des daraus hergestellten Formkörpers in einem gewünschten Maß erhöht. Als mineralisches Material in pulverförmiger Form können verschiedene Gesteinsmehle verwendet werden.

Auf diese Weise ist es möglich, mit einem natürlichen Material, welches zu 100 % aus natürlichen, also nicht synthetisch gewonnenen Rohstoffen besteht, selbst Dämmplatten und andere Baumaterialien herzustellen, welche hohe Brandschutzerfordernisse erfüllen. Mit dem erfindungsgemäßen Verfahren ist es möglich, Formkörper herzustellen, welche die Anforderungen der deutschen Brandschutzklasse A2 erfüllen.

Nach der Erfindung ist es weiter vorteilhaft, dass als Faserstoff Zellstofffasern, vorzugsweise aus recyceltem Papier, verwendet werden, welche insbesondere als geschäumter Faserbrei eingeleitet werden. Die Papierfasern werden durch Zusetzen von Stärke oder mittels geeigneter Additive und Treibmittel zu Papierschaum im Extruder aufgeschäumt oder mit Polymeren aus Naturstoffen zu einem besonders festen und gleichzeitig leichten Schaumformkörper extrudiert. Das daraus erzeugte Granulat kann als schüttfähiges Dämm-, Isolier- und/oder Füllmaterial eingesetzt werden. Derartige Chips können beispielsweise zur Trittschalldämpfung in Böden Anwendung finden.

## Patentansprüche

1. Verfahren zur Herstellung von Granulat aus einer thermoplastischen Materialmischung, welche aus einem natürlichen thermoplastischen Polymer und mindestens einer weiteren Naturstoffkomponente besteht, wobei
- das natürliche thermoplastische Polymer und die mindestens eine weitere Naturstoffkomponente in einen Extruder eingeführt werden,
- diese in dem Extruder vermischt und auf eine Temperatur aufgeheizt werden, welche in einem Fließübergangsbereich des natürlichen thermoplastischen Polymers liegt, und das natürliche thermoplastische Polymer aufgeschmolzen wird,
- die Materialmischung mit dem natürlichen thermoplastischen Polymer durch ein Formwerkzeug extrudiert wird und
- nach Durchtritt durch das Formwerkzeug die Materialmischung durch eine dem Formwerkzeug zugeordnete Schneideinrichtung zu Granulat abgelängt wird, **dadurch gekennzeichnet, dass** die Materialmischung unmittelbar vor der Austritt aus dem Extruder auf eine Temperatur unterhalb des Fließübergangs bereiches des natürlichen thermoplastischen Polymers abgekühlt wird und unmittelbar nach Durchtritt durch das Formwerkzeug zu Granulat abgelängt wird.

2. Verfahren nach Anspruch 1,
**dadurch gekennzeichnet,**
**dass** als Extruder ein Doppelwellenextruder mit gegenläufig angetriebenen Extruderwellen verwendet wird.

3. Verfahren nach Anspruch 1 oder 2,
**dadurch gekennzeichnet,**
**dass** in den Extruder ein überkritisches Fluid in einem flüssigen Zustand eingeleitet und in die Materialmischung eingearbeitet wird.

4. Verfahren nach Anspruch 3,
**dadurch gekennzeichnet,**
**dass** in einem Bereich vor dem Formwerkzeug der Druck vermindert und das überkritische Fluid als Gas abgeführt wird.

5. Verfahren nach einem der Ansprüche 1 bis 4,
**dadurch gekennzeichnet,**
**dass** ein Schutzgas in den Extruder eingeleitet wird.

6. Verfahren nach einem der Ansprüche 1 bis 5,
**dadurch gekennzeichnet,**
**dass** als weitere Naturstoffkomponente ein Faserstoff verwendet wird.

7. Verfahren nach Anspruch 6,
**dadurch gekennzeichnet,**
**dass** der Faserstoff mit einem flüssigen Additiv getränkt und/oder benetzt wird.

8. Verfahren nach Anspruch 7,
**dadurch gekennzeichnet,**
**dass** das Additiv in einem flüssigen Zustand in den Extruder eingedüst wird.

9. Verfahren nach Anspruch 7,
**dadurch gekennzeichnet,**
**dass** das Additiv in einem pulverförmigen Zustand in den Extruder eingeleitet wird, wobei das Additiv eine Schmelztemperatur aufweist, welche unterhalb des Fließübergangsbereiches des natürlichen thermoplastischen Polymers liegt.

10. Verfahren nach einem der Ansprüche 1 bis 9,
**dadurch gekennzeichnet,**
**dass** als eine weitere Komponente ein mineralisches Material vorgesehen wird, welches schwer entflammbar ist.

11. Verfahren nach einem der Ansprüchze 6 bis 10,
**dadurch gekennzeichnet,**
**dass** als Faserstoff Zellstofffasern, vorzugsweise aus recyceltem Papier, verwendet werden, welche insbesondere als geschäumter Faserbrei eingeleitet werden.

## Claims

1. Method for producing a granulate of a thermoplastic material mixture consisting of a natural thermoplastic polymer and at least one additional natural material component, wherein
- the natural thermoplastic polymer and the at least one additional natural material component are introduced into an extruder,
- mixed in the extruder and heated to a temperature, which is in a flow transition range of the natural thermoplastic polymer, and the natural thermoplastic polymer is melted,
- the material mixture with the natural thermoplastic polymer is extruded by means of a molding tool, and
- the material mixture is cut lengthwise into a granulate with a cutting device assigned to the molding tool after transiting through the molding tool,
**characterized in that**
immediately before exiting the extruder the material mixture is cooled to a temperature below the flow transition range of the natural thermoplastic polymer, and is cut lengthwise into a granulate immediately after transiting through the molding tool.

2. Method according to claim 1,
**characterized in that**
a double-screw extruder with counter-rotating extruder screws is used as an extruder.

3. Method according to claim 1 or 2,
**characterized in that**
a supercritical fluid is introduced into the extruder in a liquid state and worked into the material mixture.

4. Method according to claim 3,
**characterized in that**
in an area in front of the molding tool the pressure is reduced and the supercritical fluid is discharged as a gas.

5. Method according to any one of claims 1 to 4,
**characterized in that**
an inert gas is introduced into the extruder.

6. Method according to any one of claims 1 to 5,
**characterized in that**
a fibrous material is used as an additional natural material component.

7. Method according to claim 6,
**characterized in that**
the fibrous material is impregnated and/or wetted with a liquid additive.

8. Method according to claim 7,
**characterized in that**
the additive is injected into the extruder in a liquid state.

9. Method according to claim 8,
**characterized in that**
the additive is introduced into the extruder in a pulverous state, the additive having a melting temperature which is lower than the flow transition range of the natural thermoplastic polymer.

10. Method according to any one of claims 1 to 9,
**characterized in that**
a mineral matter is provided as a further component, which is hardly inflammable.

11. Method according to any one of claims 6 to 10,
**characterized in that**
cellulose fibers, preferably from recovered paper, are used as a fibrous material, which are particularly introduced as a foamed fiber slurry.

## Revendications

1. Procédé de fabrication de granulés à partir d'un mélange thermoplastique de matériaux, mélange qui est composé d'un polymère thermoplastique naturel et d'au moins un autre composant naturel, dans lequel :
- le polymère thermoplastique naturel et l'autre composant naturel au nombre d'au moins un sont introduits dans une extrudeuse,
- ils sont mélangés dans l'extrudeuse et chauffés à une température qui est située dans la zone de transition d'écoulement du polymère thermoplastique naturel, et le polymère thermoplastique naturel est fondu,
- le mélange de matériaux avec le polymère thermoplastique naturel est extrudé à travers un outil de formage, et
- après la traversée de l'outil de formage, le mélange de matériaux est découpé en longueur en granulés par un dispositif de coupe associé à l'outil de formage,
***caractérisé en ce qu*'**immédiatement avant la sortie de l'extrudeuse, le mélange de matériau est refroidi à une température inférieure à la zone de transition d'écoulement du polymère thermoplastique naturel et est coupé en longueur en granulés immédiatement après la traversée de l'outil de formage.

2. Procédé selon la revendication 1, ***caractérisé en ce que,*** comme extrudeuse, on utilise une extrudeuse à deux arbres comportant des arbres d'extrudeuse entraînés en sens inverse.

3. Procédé selon la revendication 1 ou 2, ***caractérisé en ce qu*'**un fluide supercritique est introduit à l'état liquide dans l'extrudeuse et incorporé au mélange de matériaux.

4. Procédé selon la revendication 3, ***caractérisé en ce que**,* dans une zone située avant l'outil de formage, la pression est diminuée et le fluide supercritique est évacué sous forme de gaz.

5. Procédé selon l'une quelconque des revendications 1 à 4, ***caractérisé en ce qu*'**un gaz protecteur est introduit dans l'extrudeuse.

6. Procédé selon l'une quelconque des revendications 1 à 5, ***caractérisé en ce que***, comme autre composant naturel, on utilise un matériau fibreux.

7. Procédé selon la revendication 6, ***caractérisé en ce que*** le matériau fibreux est imprégné et/ou mouillé avec un additif liquide.

8. Procédé selon la revendication 7, ***caractérisé en ce que*** l'additif est pulvérisé dans l'extrudeuse dans un état liquide.

9. Procédé selon la revendication 7, ***caractérisé en ce que*** l'additif est introduit dans l'extrudeuse dans un état pulvérulent, l'additif présentant une température de fusion qui est située au-dessous de la zone de transition d'écoulement du polymère thermoplastique naturel.

10. Procédé selon l'une quelconque des revendications 1 à 9, ***caractérisé en ce que,*** comme autre composant, il est prévu un matériau minéral qui est peu inflammable.

11. Procédé selon l'une quelconque des revendications 6 à 10, ***caractérisé en ce que,*** comme matériau fibreux, on utilise des fibres de cellulose, de préférence issues de papier recyclé, qui sont introduites en particulier sous forme de pâte fibreuse moussée.
